# EUROPÄISCHE PATENTSCHRIFT

(11) **EP 1 510 660 B1**
(45) Veröffentlichungstag und Bekanntmachung des Hinweises auf die Patenterteilung: **05.10.2011**
(21) Anmeldenummer: 04020106.3
(22) Anmeldetag: 25.08.2004
(51) Int. Cl.: F01K 17/02, F01C 20/06

(54) **Verfahren zur Regelung einer Kraft-Wärme-Kopplungsanlage**
Control of a combined heat and power plant
Régulation d'une installation pour la production couplée de chaleur et d'électricité

(30) Priorität: 29.08.2003 DE 10339881
(43) Veröffentlichungstag der Anmeldung: 02.03.2005
(73) Patentinhaber: Robert Bosch GmbH, 70469 Stuttgart (DE)
(72) Erfinder: Köhler, Harald, 35463 Fernwald (DE)

(56) Entgegenhaltungen:
- WO-A-01/55561
- DE-A- 19 843 002
- DE-U- 20 313 411
- US-A1- 2003 029 169

## Beschreibung

Die Erfindung betrifft ein Verfahren zum Anfahren einer Kraft-Wärme-Kopplungsanlage

Anlagen zur Kraft-Wärme-Kopplung, sogenannte Blockheizkraftwerke (BHKW), sind dezentrale, meistens mit Verbrennungskraftmaschinen angetriebene Stromerzeugungsanlagen mit gleichzeitiger Abwärmenutzung. Die bei der Verbrennung über die Kühlmedien ausgetragene Wärme wird dabei möglichst vollständig zur Beheizung geeigneter Objekte genutzt. Zur Deckung des Wärmebedarfs eines Objektes wird ein BHKW üblicherweise durch weitere Komponenten wie Spitzenkessel oder Wärmespeicher ergänzt. Kraft-Wärme-Kopplungsanlagen werden nach dem Wärme- oder Strombedarf gefahren. Wenn nur eine begrenzte elektrische Leistung erzeugt werden soll und die gleichzeitig anfallende Wärme sicher genutzt werden kann, legt man die Anlage nach dem Strombedarf aus und benötigt die elektrische Leistung als Führungsgröße. Dabei kann die Stromerzeugung mit Synchron- oder Asynchrongeneratoren erfolgen. Synchronanlagen erlauben - im Gegensatz zu Asynchronanlagen - neben dem Netzparallelbetrieb auch einen Netzersatzoder Inselbetrieb. Weiterhin nutzen die Energieversorgungsunternehmen ihre Blockheizkraftwerke zur Deckung des Spitzenlastbedarfs. Durch Fernwirkanlagen werden sie in kürzester Zeit ans Netz geschaltet.

Die Kraft-Wärme-Kopplungsanlage besitzt einen in einen beliebigen Dampfkreislauf eingebundenen Schraubenmotor zum Antrieb eines Generators. Dabei ist auch die Kombination mehrerer Schraubenmotoren, beispielsweise auf Hochdruck- und Niederdruckdampf ausgelegt, möglich. In diesem Fall ist der Generator über ein Getriebe an die Schraubenmotoren gekoppelt. Im Dampfkreislauf befinden sich weiterhin Dampferzeuger, Speisewasserpumpe, Speisewasserbehälter, Hauptdampfregelventil und Kondensator. Zur Kühlung der Lagerstellen des Schraubenmotors und Wärmeabgabe an mindestens einen Wärmeverbraucher dient ein Ölkreislauf. Zwischen der Dampf- und Ölseite im Schraubenmotor befindet sich eine Labyrinthdichtung mit Sperrluftversorgung, um einen Übergang von Öl in den Dampfbereich völlig auszuschließen. Damit kann die Kraft-Wärme-Kopplungsanlage problemlos in einen Dampfkreislauf zur Lebensmittelproduktion eingebunden werden.

Eine Regeleinrichtung ist für die Drehzahl des Generators sowie die Leistung über die dem Schraubenmotor zugeführte Dampfmenge vorgesehen. Sie steuert das Hauptdampfregelventil an. Eine weitere sorgt für die Wärmeabgabe an den mindestens einen Wärmeverbraucher.

Schraubenmotoren sind allgemein als Entspannungsmaschinen für Gase und Dämpfe aus dem Chemieanlagenbau bekannt. Dagegen kamen bei Kraft-Wärme-Kopplungsanlagen bisher hauptsächlich dampfbetriebene Kolbenmaschinen zur Anwendung. Die DE 42 03 438 A1 enthält beispielsweise eine energiesparende Kraft-Wärme-Kopplungsanlage mit Verbrennungsmotor, Generator, Dampfkreislauf und Wärmerückgewinnung. Dabei treibt allerdings ein zur Gattung der Kolbenmaschinen gehörender Verbrennungsmotor den Generator an und die Motorabgas-Wärme wird in einem Dampfkreislauf ausgenutzt. Schraubenmotoren gehören in die Gruppe der mehrwelligen Rotationsverdrängermaschinen. Sie besitzen zwei schrägverzahnte, rotierende Wellen mit Gleitlagerung, die von einem Gehäuse eng umschlossen werden. Das Arbeitsspiel entspricht etwa dem eines ventillosen Zweitakt-Hubkolbenmotors und der Arbeitsraum wird durch den Zahnlückenraum der Rotoren sowie das Gehäuse gebildet.

Dampf als Arbeitsfluid strömt durch den Einlass in einen Profillückenraum ein und bei fortschreitender Umdrehung wächst das Volumen der Profillücke. Der Füllvorgang ist beendet, wenn dieser Raum bei weiterer Rotordrehung vom Einlassquerschnitt des Gehäuses vollständig getrennt wird. Durch den Expansionsvorgang drehen sich die Rotoren im Sinne einer Profillückenzunahme, bis die Rotorzahnköpfe die Auslassgehäusekanten überfahren. Bei weiterer Umdrehung wird das Arbeitsfluid nach beendeter Expansion aus dem Profilückenraum verdrängt. Das beschriebene Arbeitsspiel läuft, je nach Zähnezahl des Hauptrotors, mehrmals pro Umdrehung ab.

Ein Dampfschraubenmotor bietet die Möglichkeit zur Energiewandlung von Wärmepotenzialen auf niedrigem Temperaturniveau. Durch den robusten Aufbau der Maschine ergeben sich nur geringe Anforderungen an die Dampfqualität, so dass eine Expansion bis weit in das Nassdampfgebiet möglich ist. Daher kann ein Dampfschraubenmotor auch als Energiewandler in Sattdampf- und Nassdampfprozessen, also einem für Turbinen nicht zugänglichen Bereich, eingesetzt werden. Problematisch bei Schraubenmotoren zum Antrieb von Generatoren war generell auch der relativ unkontrollierte Nachlauf, sobald der Generator vom Stromnetz genommen wurde.

Für einen günstigen Wirkungsgrad der gattungsgemäßen Kraft-Wärme-Kopplungsanlage ist es unter anderem wichtig, dass ein eingesetzter Schraubenmotor immer mit möglichst großer Leistung läuft. Begrenzt ist die Leistung, abhängig vom jeweiligen Betriebszustand der Anlage, im Wesentlichen durch dessen Lagertemperaturen. Daher muss darauf geachtet werden, dass immer eine ausreichende Ölschmierung und -kühlung durch Wärmeabgabe an Wärmeverbraucher sichergestellt ist.

Aus der US 2003/0029169 ist eine Kraft-Wärme-Kopplungsanlage in Form eines Mikro-Blockheizkraftwerkes bekannt. Diese besteht aus einem fossil befeuerten Dampferzeuger, einem Dampfkreislauf mit Speisewasserpumpe, Speisewasserbehälter, Hauptdampfregelventil und Kondensator, mindestens einem in einen Dampfkreislauf eingebundenen Spiral-Expander zum Antrieb mindestens eines Generators sowie mit einer Regeleinrichtung für die Drehzahl des Generators.

Der Erfindung liegt daher die Aufgabe zu Grunde, das Anfahren sowie die Regelbarkeit einer Kraft-Wärme-Kopplungsanlage, mit einem in einen Dampfkreislauf eingebundenen Schraubenmotor zum Antrieb eines Generators und einem Ölkreislauf zur Kühlung der Lagerstellen des Schraubenmotors, zu verbessern.

Erfindungsgemäß wird dies mit den Merkmalen des Patentanspruches 1 gelöst. Vorteilhafte Weiterbildungen sind den Unteransprüchen zu entnehmen. Bei den Anfahren der Kraft-Wärme-Kopplungsanlage der Schraubenmotor vor Dampfbeaufschlagung mit einer elektromotorischen Starteinrichtung in Drehung versetzt wird und dass dann mit einem Anfahrventil der Schraubenmotor auf Nenndrehzahl gebracht und der Generator zum Stromnetz synchronisiert wird. Dazu ist das Anfahrventil in einer Bypassleitung zum Hauptdampfregelventil angeordnet. Vor der Beaufschlagung mit Dampf wird der Schraubenmotor beim Starten vorzugsweise auf 10 bis 20 Prozent seiner Nenndrehzahl gebracht. Dafür ist das Anfahrventil auf etwa 15 Prozent der Dampfnennlast ausgelegt.

Beim Anfahren der Kraft-Wärme-Kopplungsanlage werden zuerst alle betriebsnotwendigen Hilfssysteme, wie Ölpumpen, Kondensatpumpen, Pumpen im Wärmeverbraucher-Kreislauf oder Sperrluftgebläse aktiviert und überprüft, bevor die elektromotorische Starteinrichtung freigegeben wird. Diese schaltet ab, wenn durch die Expansion des über das Anfahrventil in den Schraubenmotor eingetretenen Dampfes keine oder nur noch eine sehr geringe Last am Anlasser anliegt.

Nach dem Abschalten der elektromotorischen Starteinrichtung öffnet das Hauptdampfregelventil relativ schnell, solange bis etwa die halbe Nenndrehzahl des Schraubenmotors bzw. Generators erreicht ist. Danach erfolgt das weitere Öffnen des Hauptdampfregelventils bis zur Nenndrehzahl langsamer, um diese besser einstellen zu können. Der Generator wird ans Stromnetz geschaltet, wenn dessen Drehzahl während einer vorgebbaren Zeitspanne innerhalb eines vorgebbaren, zulässigen Drehzahlbandes liegt. Nach dieser Phase wird eine Leistungsregeleinrichtung aktiviert und das Anfahrventil vollständig geöffnet. Grundsätzlich gehen alle Ventile und Steuerorgane bei einem Ausfall des Stromnetzes in Sicherheitsstellung und Schnellschlussventile sperren innerhalb von etwa einer Sekunde den Dampfkreislauf ab. Die Sperrluftversorgung für die Labyrinthdichtung im Schraubenmotor ist mit einer unterbrechungsfreien Stromversorgung versehen, um sicherzustellen, dass selbst bei einem Ausfall des Stromnetzes mit einem plötzlichen Stillstand der Maschine keinesfalls ÖI zur Dampfseite übertritt. Dadurch wird garantiert, dass der Dampfkreislauf zur Lebensmittelproduktion genutzt werden kann.

Mit der Erfindung steht ein sicheres Verfahren zur Verfügung, mit dem das Anfahren sowie die Regelbarkeit einer Kraft-Wärme-Kopplungsanlage, mit einem in einen Dampfkreislauf eingebundenen Schraubenmotor zum Antrieb eines Generators und einem Ölkreislauf zur Kühlung der Lagerstellen des Schraubenmotors, optimiert wird.

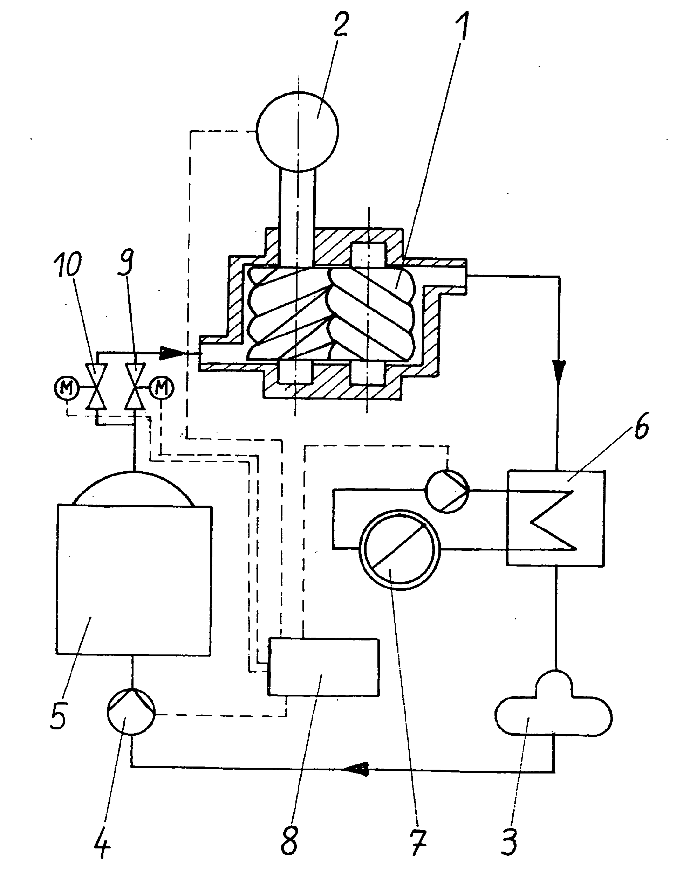

Die Zeichnung stellt ein Ausführungsbeispiel der Erfindung dar und zeigt in einer einzigen Figur den schematischen Aufbau einer Kraft-Wärme-Kopplungsanlage zur Durchführung des erfindungsgemäßen Verfahrens.

Die Kraft-Wärme-Kopplungsanlage besteht im Wesentlichen aus einem in einen Dampfkreislauf eingebundenen Schraubenmotor 1 zum Antrieb eines Generators 2. Im Dampfkreislauf wird Wasser aus einem Speisewasserbehälter 3 von einer Speisewasserpumpe 4 in einen Dampferzeuger 5 gefördert. Dann gelangt der Dampf in den Schraubenmotor 1, wird dort entspannt und strömt zum Kondensator 6. Dort erfolgt mit der Kondensation der Wärmeübergang an mindestens einen Kreislauf zu einem Wärmeverbraucher 7. Auch ein nicht dargestellter Ölkreislauf zur Kühlung der Lagerstellen des Schraubenmotors 1 gibt Wärme an den Kreislauf zu einem Wärmeverbraucher 7 ab.

Eine Regeleinrichtung 8 sorgt für die richtige Drehzahl des Generators 2, die geforderte Leistung des Schraubenmotors 1 und für die entsprechende Wärmeabgabe an mindestens einen Wärmeverbraucher 7 im jeweiligen Betriebszustand.

Im Dampfkreislauf befindet sich zwischen dem Dampferzeuger 5 und dem Schraubenmotor 1 ein Hauptdampfregelventil 9 sowie in einer Bypassleitung dazu ein Anfahrventil 10.

## Patentansprüche

1. Verfahren zum Anfahren einer Kraft-Wärme-Kopplungsanlage, bestehend aus einem Dampferzeuger (5), einem Dampfkreislauf mit Speisewasserpumpe (4), Speisewasserbehälter (3), Hauptdampfregelventil (9) und Kondensator (6), mindestens einem in einen Dampfkreislauf eingebundenen Schraubenmotor (1) zum Antrieb mindestens eines Generators (2), einem Ölkreislauf zur Kühlung der Lagerstellen des Schraubenmotors (1) und Wärmeabgabe an mindestens einen Wärmeverbraucher (7), einer Regeleinrichtung (8) für die Drehzahl des Generators (2) sowie der Leistung über die dem Schraubenmotor (1) zugeführte Dampfmenge und einer Regeleinrichtung (8) für die Wärmeabgabe an den mindestens einen Wärmeverbraucher (1), wobei zwischen der Dampf- und Ölseite im Schraubenmotor (1) eine Labyrinthdichtung mit Sperrluftversorgung angebracht ist, wobei beim Anfahren der Kraft-Wärme-Kopplungsanlage der Schraubenmotor (1) vor Dampfbeaufschlagung mit einer elektromotorischen Starteinrichtung in Drehung versetzt wird und dass dann mit einem Anfahrventil (10) der Schraubenmotor (1) auf Nenndrehzahl gebracht und der Generator (2) zum Stromnetz synchronisiert wird.

2. Verfahren nach Anspruch 1,
**dadurch gekennzeichnet, dass** der Schraubenmotor (1) beim Starten vor Dampfbeaufschlagung vorzugsweise auf 10 bis 20 Prozent seiner Nenndrehzahl gebracht wird.

3. Verfahren nach Anspruch 1 oder 2,
**dadurch gekennzeichnet, dass** das Anfahrventil (10) auf etwa 15 Prozent der Dampfnennlast ausgelegt ist.

4. Verfahren nach einem der Ansprüche 1 bis 3,
**dadurch gekennzeichnet, dass** beim Anfahren der Kraft-Wärme-Kopplungsanlage zuerst alle betriebsnotwendigen Hilfssysteme aktiviert und überprüft werden, bevor die elektromotorische Starteinrichtung freigegeben wird.

5. Verfahren nach einem der Ansprüche 1 bis 4,
**dadurch gekennzeichnet, dass** die elektromotorische Starteinrichtung abschaltet, wenn diese durch die Expansion des über das Anfahrventil (10) in den Schraubenmotor (1) eingetretenen Dampfes weitgehend lastfrei ist.

6. Verfahren nach einem der Ansprüche 1 bis 5,
**dadurch gekennzeichnet, dass** nach dem Abschalten der elektromotorischen Starteinrichtung das Hauptdampfregelventil (9) zügig öffnet, bis etwa die halbe Nenndrehzahl des Schraubenmotors (1) bzw. Generators (2) erreicht ist, und dass danach das weitere Öffnen des Hauptdampfregelventils (9) bis zur Nenndrehzahl langsamer erfolgt.

7. Verfahren nach einem der Ansprüche 1 bis 6,
**dadurch gekennzeichnet, dass** der Generator (2) ans Stromnetz geschaltet wird, wenn dessen Drehzahl während einer vorgebbaren Zeitspanne innerhalb eines vorgebbaren, zulässigen Drehzahlbandes liegt, dass danach eine Leistungsregeleinrichtung aktiviert wird und dass das Anfahrventil (10) vollständig geöffnet wird.

8. Verfahren nach einem der Ansprüche 1 bis 7,
**dadurch gekennzeichnet, dass** alle Ventile (9,10) und Steuerorgane bei einem Ausfall des Stromnetzes in Sicherheitsstellung gehen und dass Schnellschlussventile den Dampfkreislauf absperren.

## Claims

1. A method for starting up a combined heat and power plant, consisting of a steam generator (5), a steam circuit with feed water pump (4), feed water container (3), main steam regulating valve (9) and condenser (6), at least one screw-type engine (1) incorporated in a steam cycle for driving at least one generator (2), an oil circuit for cooling the bearing points of the screw-type motor (1) and releasing heat to at least one heat consumer (7), a regulating device (8) for the rotational speed of the generator (2) and the power by means of the amount of steam supplied to the screw-type motor (1) and a regulating device (8) for the heat release to the at least one heat consumer (1), wherein a labyrinth seal with sealing air supply is mounted between the steam and oil side in the screw-type motor (1), wherein upon starting up the combined heat and power plant, the screw-type motor (1) is set in rotation before being acted upon by steam with an electromotive starting device and the screw-type motor (1) is then brought to a rated speed with a starting valve (10) and the generator (2) is synchronized with the mains.

2. The method according to claim 1, **characterised in that** upon starting, before being acted upon by steam, the screw-type motor (1) is brought to preferably 10 to 20 per cent of its rated speed.

3. The method according to claim 1 or 2,
**characterised in that** the starting valve (10) is designed for about 15 per cent of the rated steam load.

4. The method according to any one of claims 1 to 3,
**characterised in that** upon starting up the combined heat and power plant, firstly all the auxiliary systems required for operation are activated and checked before the electromotive starting device is released.

5. The method according to any one of claims 1 to 4,
**characterised in that** the electromotive starting device is switched off when this is largely load-free due to expansion of the steam which has entered into the screw-type motor (1) via the starting valve (10).

6. The method according to any one of claims 1 to 5,
**characterised in that** after switching off the electromotive starting device, the main steam regulating valve (9) opens rapidly until about half the rated speed of the screw-type motor (1) or generator (2) is reached and that thereafter, the further opening of the main steam regulating valve (9) takes place more slowly as far as the rated speed.

7. The method according to any one of claims 1 to 6,
**characterised in that** the generator (2) is switched to the mains when its rotational speed during a pre-definable time interval lies within a pre-definable permissible speed band, that thereafter a power regulating device is activated and that the starting valve (10) is completely opened.

8. The method according to any one of claims 1 to 7,
**characterised in that** in the event of a failure of the mains, all the valves (9, 10) and control
members go into safety position and that quick-acting valves shut off the steam circuit.

## Revendications

1. Procédé pour démarrer une installation de couplage force-chaleur, comprenant un générateur de vapeur (5), un circuit de vapeur avec pompe à eau d'alimentation (4), réservoir d'eau d'alimentation (3), vanne de réglage de vapeur principale (9) et condensateur (6), comprenant un moteur à vis (1) intégré dans un circuit de vapeur pour l'entraînement d'au moins un générateur (2), un circuit d'huile pour le refroidissement des points de palier du moteur à vis (1) et le transfert de chaleur à au moins un consommateur de chaleur (7), un dispositif de réglage (8) pour le régime du générateur (2) et de la puissance par l'intermédiaire de la quantité de vapeur amenée au moteur à vis (1) et un dispositif de réglage (8) pour le transfert de chaleur à au moins un consommateur de chaleur (1), un joint à labyrinthe avec alimentation en air de retenue étant placé entre le côté vapeur et le côté huile dans le moteur à vis (1), le moteur à vis (1) étant mis en rotation lors du démarrage de l'installation de couplage force-chaleur avant l'alimentation en vapeur avec un dispositif de démarrage à moteur électrique et en ce que le moteur à vis (1) est amené ensuite au régime nominal avec une vanne de démarrage (10) et le générateur (2) est synchronisé avec le réseau électrique.

2. Procédé selon la revendication 1,
**caractérisé en ce que** le moteur à vis (1) est amené lors du démarrage avant l'alimentation en vapeur de_préférence jusqu'à 10 à 20 pour-cent de son régime nominal.

3. Procédé selon la revendication 1 ou 2,
**caractérisé en ce que** la vanne de démarrage (10) est conçue pour environ 15 pour-cent de la charge nominale de vapeur.

4. Procédé selon l'une quelconque des revendications 1 à 3,
**caractérisé en ce que**, lors du démarrage de l'installation de couplage force-chaleur, tous les systèmes auxiliaires nécessaires pour le fonctionnement sont d'abord activés et contrôlés avant que le dispositif de démarrage à moteur électrique soit libéré.

5. Procédé selon l'une quelconque des revendications 1 à 4,
**caractérisé en ce que** le dispositif de démarrage à moteur électrique déconnecte lorsque celui-ci est largement débarrassé de la charge du fait de l'expansion de la vapeur entrée par la vanne de démarrage (10) dans le moteur à vis (1).

6. Procédé selon l'une quelconque des revendications 1 à 5,
**caractérisé en ce que**, après la déconnexion du dispositif de démarrage à moteur électrique, la vanne de réglage de vapeur principale (9) s'ouvre rapidement jusqu'à ce qu'environ le demi-régime nominal du moteur à vis (1) ou du générateur (2) soit atteint, et ce qu'ensuite l'ouverture ultérieure de la vanne de réglage de vapeur principale (9) intervient plus lentement jusqu'au régime nominal.

7. Procédé selon l'une quelconque des revendications 1 à 6,
**caractérisé en ce que** le générateur (2) est connecté au réseau électrique lorsque son régime se situe pendant un laps de temps prédéfinissable dans les limites d'une bande de régime prédéfinissable et autorisé, **en ce qu'**ensuite un système de réglage de puissance est activé et **en ce que** la vanne de démarrage (10) est complètement ouverte.

8. Procédé selon l'une quelconque des revendications 1 à 7,
**caractérisé en ce que** toutes les vannes (9, 10) et tous les organes de commande passent en position de sécurité dans le cas d'une défaillance du réseau électrique et **en ce que** les vannes de fermeture rapide bloquent le circuit de vapeur.
